# EUROPEAN PATENT SPECIFICATION

(11) **EP 3 800 753 B1**
(45) Date of publication and mention of the grant of the patent: **06.12.2023**
(21) Application number: 19200763.1
(22) Date of filing: 01.10.2019
(51) Int. Cl.: H02H 1/00, H02H 3/04, H02H 7/26, H04B 3/54

(54) **A SMART SELF-FEEDING FUSE WITH CURRENT DETECTION AND COMMUNICATION**
INTELLIGENTE SELBSTSPEISENDE SICHERUNG MIT STROMERFASSUNG UND KOMMUNIKATION
FUSIBLE INTELLIGENT À AUTO-ALIMENTATION DOTÉ DE DÉTECTION DE COURANT ET DE COMMUNICATION

(43) Date of publication of application: 07.04.2021
(73) Proprietor: ENERGISA S.A., Cep. 36.770-901 - Minas Gerais (BR)
(72) Inventor: Celso, Garcia Lellis Junior, 06543-225 São Paulo (BR); Ayres, Antonio Paes de Oliveira, 06540-285 São Paulo (BR)
(74) Representative: Alpspitz IP

(56) References cited:
- US-A1- 2016 308 345

## Description

The present invention is directed to a smart self-feeding fuse with current detection and communication. Depending on the way the inner components are assembled, the device can be used as a Fault Sensor that will be called SENSOR and/or Communication Gateway and, will be referred to a GATEWAY. It will be used in overhead distribution electric lines grid, as an element to detect permanent or transitory faults. Fault is the denomination of a short circuit occurrence in the electric network that can generate either a transitory event, when the electric power distribution network, or a permanent event, when the electric power supply is interrupted.

US 2016/308345 A1 relates to a fuse for protecting a power distribution feeder that is operable to isolate the portion of a power network experiencing a fault, determine fault location and communicate the fault location, and generate a power network operational status to a utility crew or a control center.

The present invention will be part of the so-called "Internet of the Things", which is used for improving the control and protection of overhead distribution electric lines networks.

The present invention is defined in claim 1. The present application discloses a smart self-feeding fuse with current detection function and communication function, comprising: a plastic cabinet having a through-hole for inserting the fuse tube; a self-feeding nanocrystalline core CT Current Transformer and OPV Organic Photo Voltaic standard solar cells; a supercapacitor board as the only energy storage medium;a set of radios containing a short range and a long range of communication blocks, using an InterNet of Things; a current detector as a current sensor; a GPS module to identify georeferenced coordinates of the fuse; an accelerometer module for identifying the fall of the fuse tube; and a LED ring for visual signaling; wherein the smart self-feeding fuse is installed directly in the medium voltage energy power distribution grid using a C-type base fuse base as a physical support, providing both functions of communications GATEWAY,and signaling transitory or permanent faults.

The present invention aims at creating a solution for an easy and fast installation that can combine two complementary functions: the current detection by discriminating the rated currents from the currents generated by permanent or transitory faults, SENSOR, and long-range communication when in the long-range radio function, GATEWAY.

The SENSOR will operate similarly to traditional fault detectors described in the State of the Art herein below, sending the information related to transitory or permanent fault to a control center, by means of its own communication network.

The GATEWAY will combine two of the best communication technologies: the radio frequency communication technology, MESH, which is based on the data pack routing at each knot of the data network, with the Point-Multipoint radiofrequency communication technology, which is based on the creation of sectorial star networks. Each of said technologies will be used in a part of the solution, making it possible to create communication networks to be used in the solutions related to the automation of overhead distribution electric lines grid, as well as the automation of electronic meters, in urban and/or isolated regions, where there are no viable ways to access traditional communication networks, or the present solutions are expensive, this making it impossible to design remote metering.

The device will be installed in medium voltage energy grid (15kV, 27kV and 34 kV voltages) assembled on C-Type base fuse, keeping the protection characteristic (the fuse link) intact. It will be assembled around the Fuse Tube, keeping the fuse link unchanged inside same. It can do the SENSOR and/or GATEWAY functions, depending only on the inner configuration thereof.

The device will use the induction of loading currents of medium voltage energy grid for feeding same, as well as its physical structure, such as its mechanical support, this creating a communication cell, GATEWAY, and/or a current detector, SENSOR.

The SENSOR will be associated to each of the phases of the overhead distribution electric lines grid (Phases A, B and C), monitoring the operation conditions thereof. Several sets of SENSOR's will be associated to a certain GATEWAY, using a STAR architecture short range radio (Point-Multipoint) therefor. The GATEWAY contains a hybrid communication architecture, STAR - MESH. Among several GATEWAY devices, there will be a MESH network communication, with a transport protocol implemented by a 6LowPAN (IPv6 over Low power Wireless Personal Area Networks) network, or another one similar thereto, wherein each element will represent a reinforcement knot for the next element. Thus, the communication net will extend along the cables of the electric power distribution networks in such a way that the communication is viable along the overhead distribution electric lines grid. The communication in said layer can be implemented in a free frequency, in the 433 MHz or 900 MHz band, or in a licensed frequency, in the 400 MHz band, as example.

In addition to MESH network, the GATEWAY device will provide another radio frequency communication means, in a Point-Multipoint architecture implemented by a network as per the LoRA standard (Low Power Wide Area Networks), LoRAAlliance, or the like, thus creating a local communication island that will allow the association of several devices on the loT (Internet of Things) networks. The GATEWAY device will be able to operate as end device or repeater way, making it possible to extend the communication for long stretches without the need to create auxiliary communication networks. Thus, we will have a main communication network formed by the radio frequency communication MESH/6LowPAN, or the like, and auxiliary networks formed by small communication islands next to the devices to be integrated, formed by radio frequency networks Point-Multipoint/LoRA, or the like.

The topology of such networks will be a combination of STAR networks (next to radio frequency devices), with radial networks provided with repeaters, by using the communication technology RF-MESH, supported by medium voltage overhead distribution electric lines grid.

At each knot of this communication network consisting of a GATEWAY device, several SENSOR devices doing the current detection function in electric power networks will be associated thereto, allowing the control centers to monitor the functioning of the electric networks remotely, thus making it easy to identify interruption points in overhead distribution electric lines grid and monitor the loading currents thereof.

Since the present solution brings about two functions, (SENSOR and GATEWAY), said functions being presently exerted by totally different equipment. The description of the State of the Art will be given in two steps as well.

The State of the Art in use to assist the identification and localization of faults is represented by the so-called "Fault Detectors" (which function is did by the invention, in the SENSOR function). The function of said equipment is to indicate the spot at which the circuit was interrupted. For such purpose, they analyze the current levels of the circuit and, when there is a sudden current variation, they enter into a signaling state that is indicated by a blinking LED which is usually red. The fault detection can take place in two situations. In a transitory fault, the detectors blink at a frequency, and blink at a higher frequency in a permanent fault.

The large-scale application of said technology can provide the electrical system with great advantages. However, there is a number of restrictions that prevent same from being adopted in significant volumes that vary from the high cost of the current solutions to the technical operational questions that will be discussed below.
(a) The power feeding system: In general, there are two types of feeding for the present "Fault Detectors". The simplest cheap sensors are fed by non-rechargeable batteries, since they do not have an independent feeding means. This limits their use in several aspects, besides generating significant maintenance and management costs, resulting in issues when they are to be used in large scale. The battery feeding brings about the inconvenience of limiting the detector operating time whenever a fault occurs, in order to minimize the waste thereof in each occurrence. Moreover, the use thereof limits the use of "Fault Detectors" as active points in the communication networks to be used in solutions of tele-supervised systems.
(b) The second group, represented by more expensive and complex "Fault Detectors", contains CT's (Current Transformers) having a bi-sectioned core that are used to convert the current that flows in the overhead distribution electric lines grid for the operation thereof. The CT's having bi-sectioned cores, in addition to their natural mechanical complexity, that results in a high industrial cost product, exhibit an Ampere/Coil output much lower than closed core CT's, in view of the losses generated by the junction of gaps. As a result, said products require high currents in the primary network so that they can operate correctly. We can assume that an average of from 10 to 15 A is required in the primary networks in order to assure an operation is performed.
(c) Use of low output CTs: The current solutions use a product format that requires the use of ferromagnetic CT's (Current Transformers) having open or bi-sectioned cores that reduce the output thereof as the power source to be used. The formats vary from the simplest solutions with springs that allow them to be installed by maneuver poles, to more complex solutions that require live line crews with trucks and aerial baskets for the installation thereof.
(d) Periodic maintenance and low reliability:
   To assure the reliability of the sensors on the battery, the adoption of a periodic intensive well-controlled maintenance program is required, since all the solutions depend on the perfect conditions of the battery so that it functions well. Thus, the local battery check routines using magnetized devices installed in maneuver poles are indispensable in order to maintain the reliability of the system. The cost of exchanging the batteries is associated to this. However, even when a periodic maintenance routine is used the reliability of the current solutions is low, since the batteries can exhibit fatigue within hours, or even minutes, after an inspection is carried out, for the most conventional cases where detectors are not tele-supervised.
(e) Limitation of use in tele-supervised systems: Most of the currently available solutions use low power radios integrated with "Fault Detectors" that send periodic information to communication devices located a few meters from the detector assembly. Said devices can be fed by the secondary electric power network, when present, or by solar panel systems and batteries that are integrated to the cellular communication system. Said configuration reduces their use in tele-supervised systems due to some factors. In urban networks, the communication between the wire sensors and communication devices is to be accomplished only when a fault takes place, to prevent the batteries from being worn out prematurely. Thus, an important information on the electric loading of the power distribution network that could be used for planning or even for system overload preventive alarms is not sent to Control Centers. In rural networks, the dependence on the signal of a public cellular network reduces its operating area to regions that are provided with the proper communication coverage, but this fact is not present in a large part of rural networks.
(f) Finally, the existing alternatives that use bi-sectioned CT's are complex solutions of a high final cost, thus making their large-scale use impracticable.

The State of the Art related to communication devices (a function exerted by the invention when used in the GATEWAY function) is accomplished by different technologies, each of which has limitations and difficulties that have been duly addressed by the invention described herein. The traditional communication technologies that are based on short or even long-range radio are extremely complex to be employed in rural areas that encompass small urban centers spread over large geographic areas. They are neither economically nor technically viable to create long-range radio links to cover towns having 20, 30 or up to 300 residences, concerning the implantation of solutions regarding automation, supervision and remote measurement of electric power that are distributed along medium voltage grid. Said overhead energy grid can be over 100 km long, thus making it quite difficult to identify fault points, and this can be a challenge for any remote power management technology.

Another alternative is to use the current communication PLC (Power Line Communication) technologies that can hopefully satisfy the needs of this geopolitical scenario. However, when the current technologies were used in other experiences in national electric power networks, they exhibited faults that made the large-scale implementation impracticable. Three distinct technology aspects have typically been tested: the ultra-low speed technology that does not require couplers to transpose low voltage transformers, natural high frequency filters, the low speed technology that is mostly implemented in low voltage networks as a communication means among residential control equipment (residential automation) or even smart meters, and the broad band technologies that require couplers to transpose the barriers represented by the transformers and are used as an alternative to rendering data communication services in detriment of other technologies such as optical wires or radio.

The short band ultra-low speed communication solutions that are typically represented by the "*Turtle*" technology manufactured by Schlumberger are an excellent alternative to the transmission of metering data in rural networks, since the low voltage transformers do not require couplers, and they can be transmitted for long distances, thus reaching more than 100 km without requiring repeaters. For such purpose, the frequency band in the transmission is extremely low, and ranges from 5 kHz to 15 kHz. Within said band, the "*Turtle*" technology limits only 0.0015 Hz at each connection point, thus allowing thousands of devices to share the same means (with a division by the transmission frequency) and the signal can travel directly for long distances, consuming only 3.0 mW of power.

Despite all such advantages, the use of the "*Turtle*" technology is limited in the energy grid automation and supervision area, since the transmission of the information lasts even days, thus preventing tele-command actions. The same occurs in the case when clients require more constant measurements, as in case of analyzing the load profile, remote cut and reconnection actions, or even information on faults and power restoration. The ultra-low speed thereof prevents said technology from expanding to other smart network applications, thus eliminating same as an option to be used in smart grids networks.

Within the group of PLC ("Power Line Communication") technologies, the "PRIME" ("Power Line Intelligent Metering Evolution") technology is currently predominant. This technology is represented by an association of manufacturers that presently encompass the largest electric power metering companies, which is a great trend in the European market. According to "*Alliance Forum*", more than the 10 million meters distributed by several manufacturers were installed in 2015, thus demonstrating a strong trend to adopt this communication standard for AMR ("Automatic Meter Reading") solutions. The "PRIME" technology operates through OFDM modulation, thus assuring a higher immunity to the noises present in the electric network. Its architecture is based on a star where communication concentrators are installed in the secondary of low voltage transformers responsible for the communication between the meters, provided with PLC-PRIME modems. Said technology is highly appropriate to underground networks because of its constructive characteristics. However, it does not satisfy the applications in rural electric networks, since it requires available communication links between the metering concentrators and the management center that are not present most of the time. Moreover, some tests using said technology have been conducted in Brazil, and most of them have demonstrated that the communication using said low voltage technology was not efficient in view of the precarious characteristics of the Brazilian electric energy power distribution networks.

The third group uses BPLC ("Broadband Power Line Carrier") technologies that represent an application more focused on rendering InterNet Broad Band services. Two architectures can be used in this application. One wherein medium voltage networks are used as a communication means between concentrators installed in the secondary of the network already in low voltage, and optical/radios microwave networks installed in the substations. This is the most suitable architecture to satisfy the application needs in rural networks. The other architecture conforms to the same standard as that of the "PRIME" technology. However, said technology suffers from the same interference problems of low voltage networks exhibited by the "PRIME" technology with which it shares the modulation form, and requires couplers with the same transformer insulation to transpose the high frequency filters represented by the distribution transformers.

In addition to all the limitations above, the use of the PLC technology is impracticable when solving problems in automation and monitoring electric networks, simply because the physical communication means is the electric wire itself. Once broken, the information will not be available any longer, a fact that prevents definitively its use as an alternative to automation and supervision of electric power distribution networks equipment.

Thus, the State of the Art does not represent a solution to the communication problem found in power distributors to serve the rural population and also the population in urban areas.

The present invention exerts two distinct inherently associated functions. In the SENSOR, the basic functions of identifying transitory and permanent faults, differentially signaling by a blinking LED, configurating transient adjustments, monitoring the loading current of the circuit in RMS values, and sending fault events and the geophysical localization thereof by GPS are carried out, besides including an accelerometer that can identify when the fuse link to which it is associated is burned, as well as its removal from the origin place by identifying the movement thereof.

To provide a "Fault Detention" solution, the present solution associates the devices in the SENSOR function to the device in the GATEWAY function that will be installed in phase B of the circuit, responsible for the management and communication of the devices in the SENSOR function. As many SENSOR's as required for monitoring the neighboring circuits can be associated, thus optimizing the fault detection costs in distinct circuit branches. The use of the LoRA (Low Power Wide Area Networks) technology to communicate GATEWAYS with SENSORS indicates that each GATEWAY can cover an area of from 5 km² to 10 km², thus optimizing the costs and installation complexity of supervision solution in large geographic areas.

SENSOR has the same constructive characteristic of GATEWAY, that is, it is micro-processed with a CT input for current reading, self-feeding by a nanocrystalline core CT, provided with a set of supercapacitors capable of sending fault information when the feeding thereof is interrupted, a LED for identifying the fault, and RF-LoRA radio, with an inner antenna to communicate with the GATEWAY customer. Its mechanical construction was designed to be installed by a maneuver pole directly on C-type base fuses, replacing conventional Fuses Tube, thus keeping the fuse link protection function intact. Thus, the fuse switch protection function is kept similarly to the one presently used. The product will be installed without turning the energy power grid off by using a Short Circuit Spring, already developed for this purpose.

The GATEWAY was designed to combine the best of two communication technologies. On the other hand, in order to cover the long ranges to reach small towns, by using the RF / MESH technology at free frequencies as 433 MHz and 900 MHz, or licensed frequency as 400 MHz, so that the signals travel over long ranges, with rates of up to 300 Kbps and, on the other hand, using the RF / Point-Multipoint at free frequencies within 433 MHz or 900 MHz bands, as a transportation means for the communication devices associated to low voltage energy grid, the interferences problems present in Brazilian energy grid are prevented. That is, the medium voltage grid will support the main communication RF/MESH branch, while low voltage grid, wherein the equipment to be integrated will be connected will be served by the RF/Point-MultiPoint technology, providing the communication with SENSOR devices and eventually with other devices that are compatible with the existing communication network.

In the communication gateway function, the invention is represented by a 6LowPAN (IPv6 over Low power Wireless Personal Area Networks) protocol converter for LoRA (IPv6 over Low power Wireless Personal Area Networks - Low Power Wide Area Networks), or it can use other protocols that may be created to exhibit the same communication topology. The same fuse will be installed in phase B of the overhead energy power distribution grid, directly on the C-type base fuse, keeping the basic function of protection by the fuse and adding two other functionalities thereto. One of short-range communication carried out by a radio operating in the STAR topology, at free frequencies as 433 MHz or 900 MHz bands, to be used in the final connecting points in the so-called "last mile network", and the other of long-range communication carried out by a radio operating in the MESH topology, at free frequencies in 433 MHz or 900 MHz bands, or licensed frequency in the 400 MHz band, thus establishing a direct connection with WAN (Wide Area Network) networks, where they are available, and they can be located in electric power substations, stores, or other points made available by telecommunication operators. The GATEWAY also plays the role of a signal repeater, allowing RF/MESH networks to travel over long distances, which is one of the main objects of this product.

The use of C-type base fuses as a GATEWAY physical support and feeding means represents one of the innovations in the solution. By definition, the energy grid are radial networks located close to the communication points to be integrated into the detection and metering solutions, and there are thousands of fuses supported by C-type bases. Thus, the physical proximity makes the communication more efficient, allowing to direct the irradiated power along the energy grid path. On the other hand, in places where the communication signals need to be widely irradiated so that several devices are associated to the communication network, a highly sensitive LoRA standard STAR network will be used, thus facilitating the association of several points, even if they are installed under adverse conditions. The use of the medium voltage energy grid for feeding power and C-type base fuses for physically supporting the GATEWAY, they are also elements for facilitating and reducing costs, and they are only possible due to the association to other technologies such as the use of supercapacitors (without batteries), for maintaining the feeding when the loading current of the circuit is absent, as well as OPV (Organic Photo Voltaic) standard solar cells, as an auxiliary element in the generation of power at the loading times of the main circuit.

The GATEWAY operates as a transportation for different communication protocols, comprising only layer 4 of the OSI model (Transport), allowing several applications to use the same communication means. It uses 6LowPAN as the transport protocol, encapsulating different application protocols, according to this standard. This makes it possible to conform the solution to the network standards worldwide, making it easy to integrate same to the existing communication networks.

The GATEWAY carries out the 6LowPAN/LoRA protocol conversion by transporting the data of the equipment used in the detection of the power supply distribution networks, such as fault signalers (SENSOR), and other network elements, as well as for the remote reading of smart electric power meters and the gateways thereof for the purpose of invoicing and management, said function been anticipated in the relevant patent. For this purpose, it is provided with a technology that can differentiate data packs as a function of the priority thereof, allowing the information from the automation of DA ("Distribution Automation") distribution to be primarily transported in detriment of the remote metering information -AMR ("Automatic Meter Reading").

Under the constructive aspect, GATEWAY was designed to be installed directly on Matheus type base fuses, without requiring any adaptation. For that purpose, it is provided with innovative technologies described herein, satisfying the premise of easy installation and low cost that is essential for its large-scale use.

Under the exclusive communication network aspect, the 6LowPAN- LoRA GATEWAYS are devices that play the role of the so-called "Range Extender" network elements of simple and cheap configuration that are responsible for the extension of communication networks to more distant points, by repeating signals. This will be one of the roles of GATEWAY, and it shall not be seen as a data concentration or handling element.

The above descriptions do not limit the use of GATEWAY to the application of communication of the so-called "InterNet of Things". The way it is installed and fixed, as well as its self-feeding resources by high output nanocrystalline current transformers and association to OPV photovoltaic cells for additional support in the power generation are technical elements that can be used to support other communication technologies, such as the ones that are foreseen in future 5G communication networks, represented by the so-called communication "fantocells". The GATEWAY proposed herein, similarly to its application in the monitoring electric power distribution networks described herein, also could be used in high voltage transmission lines.

In the above SENSOR function: The invention allows to differentiate the transients generated by short circuits, the transients generated by "inrush" currents, and the constant sending to GATEWAY of RMS currents of all phases associated thereto, in addition to the local and remote signaling (LED) of transitory events.

In the above GATEWAY function: They have the following differentiation characteristics: association of two different technologies 6LowPAN and LoRA, each of which is aimed at playing a distinct role in the solution. The 6LowPAN technology serves to support the long-range communication, operating along medium voltage networks, since they are closer to the points to be integrated to the communication network, serving as the ideal physical support means of the data communication devices, by means of C-type base fuses and for supplying the energy of the GATEWAY proposed herein. The LoRA technology, serving as a communication means for the "last mile" networks, prevents the high electric interference problems found in low voltage networks, in view of the precariousness of the electric installations present in the national electric networks, thus creating wide spectrum and long-range communication cells, allowing several devices to be integrated.

The present invention (either in the SENSOR function or the GATEWAY function) is based on the use of closed core nanocrystalline CTs integrated to Fuse Tube to be directly installed on C-type base fuses, in such a way that they can be installed and removed fast and easily. Associated to the short circuit spring, already present as the equipment of electrician crews, it can be installed or removed without the need to interrupt the feeding circuit, as well as without using trucks or aerial baskets. The installation will be carried out by the maneuver pole, directly on the ground, similar to the installation of a conventional Fuse Tube.

The construction of the nanocrystalline CT, associated to the Fuse Tube, makes it possible to use a closed core CT, with a high ampere/coil output, resulting a higher power generation capacity from the current present in the primary medium voltage network, thus making it possible to exert functions that require a higher consumption of power. The auto-feeding also dispenses with low voltage networks and the need of grounding, thus making the product extremely immune to the faults generated by atmospheric discharges usually present in both rural and urban areas.

The invention replaces the traditional batteries with supercapacitors that are dimensioned so that maintenance is not required, have a low leakage currents and a useful life longer than 30 years; the electronic circuits do not use electrolytic capacitors, since they are greatly responsible for the low reliability of electronic systems, exhibit a high fatigue curve as a function of the high operating temperatures incompatible with the life expectancy and reliability of the invention.

The invention uses OPV photovoltaic cells integrated to the body of the product that are used as an auxiliary electric power source that is required when medium voltage primary power circuits are interrupted, allowing to maintain the communication for a certain period, at critical moments of the electric power interruption.

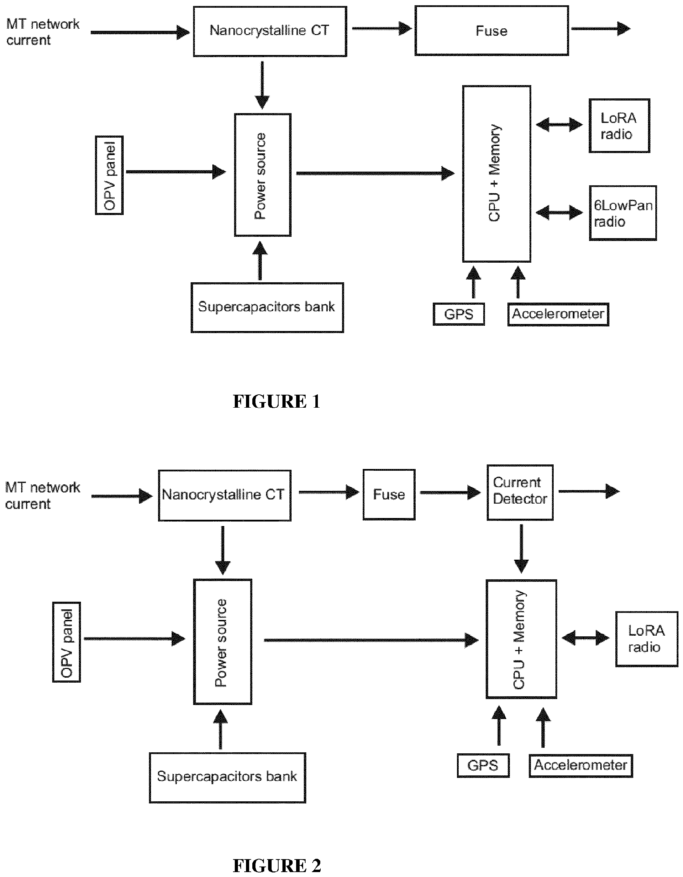

The present invention will be described next with the aid of Figures 1 to 11.

Figure 1 depicts a block diagram of the present invention, assembled as a GATEWAY, showing the main components of the GATEWAY. It represents: the auto-feeding system comprised of a nanocrystalline core transformer to supply the main power; a fuse, whose basic functions remain intact; a power source; a supercapacitors bank to support the feeding when the electric current is absent in the primary network; a photovoltaic film, OPV (Optical Photo Voltaic) panel, for supplying auxiliary power when the load in the primary electric network is low; two communication blocks, LoRA radio and 6LowPAN radio, to form the MESH and Point-Multipoint networks; a GPS module to identify the georeferenced coordinates of the device; an accelerometer module to identify the fall of the fuse tube or its removal from the installation site and the CPU with a memory.

Figure 2 depicts a block diagram of the present invention assembled as a SENSOR, showing the main components of the SENSOR. It represents: the auto-feeding system, comprised of a nanocrystalline core transformer, to supply the main power; a fuse link, whose basic functions remain intact; a current detector to detect the current of the primary network; a power source; a supercapacitors bank to support the feeding when the electric current is absent in the primary network; a photovoltaic film, OPV (Optical Photo Voltaic) panel for supplying auxiliary power when the load in the electric network is low; a CPU board with a memory; a Point-MultiPoint LoRA radio; a GPS module to identify the georeferenced coordinates of the device, and an accelerometer module to identify the fall of the fuse tube or its removal from the installation site.

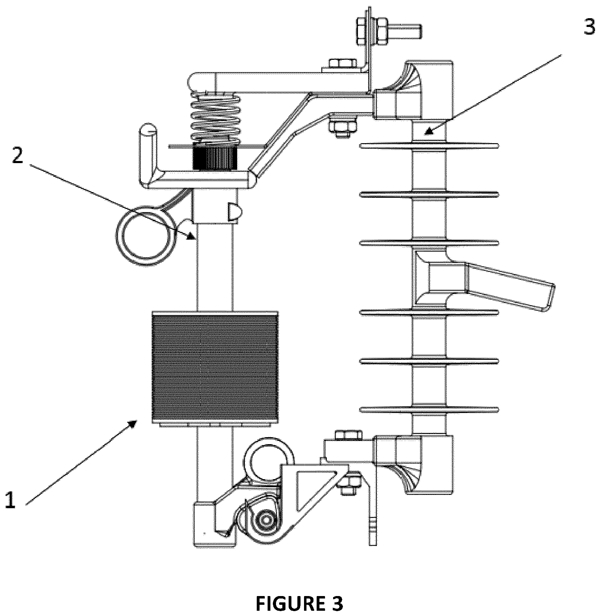

The following Figures 3 to 10 describe the product in details. However, the proportions thereof are mere references, and can be changed in order to fully satisfy the requirements of the invention:
Figure 3 represents a 3D view of the invention - GATEWAY (1) installed on the C-type base fuse support (3), solidary with the conventional fuse tube (2), preserving the function of originally protecting the fuse link inside same.

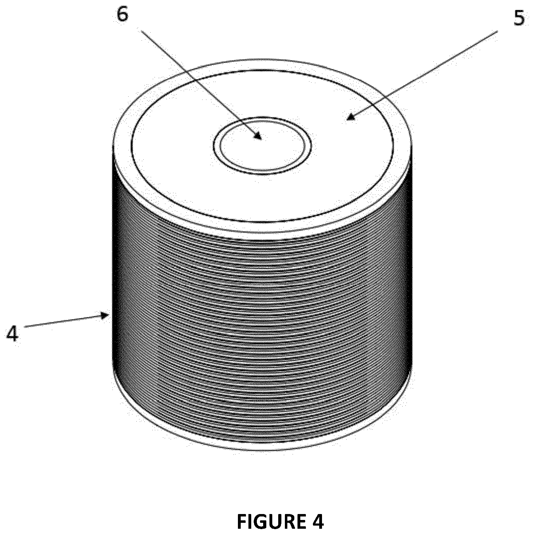

Figure 4 represents a 3D view of the invention - GATEWAY, showing the OPV (Optical Photo Voltaic) solar capture film (4), the isolating epoxy resin (5) that will make the device impervious to liquids and protect the electronic components thereof from humidity and corrosion, and the through-hole (6) for inserting the conventional fuse tube, making it possible to preserve the function of originally protecting the fuse link inside same.

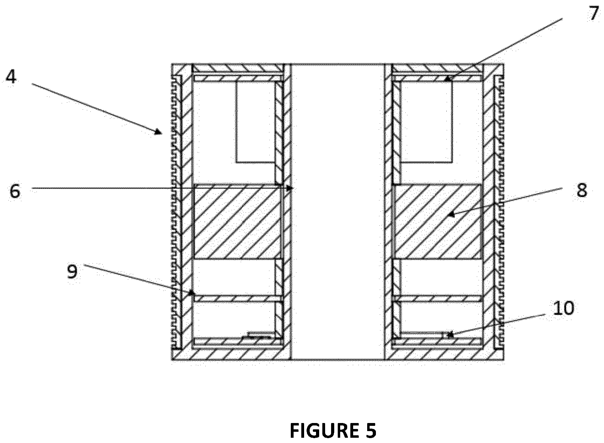

Figure 5 represents a cut view of the invention, assembled in the GATEWAY function, showing the OPV photovoltaic film (4), the through-hole of the conventional fuse (6), the supercapacitors board (7) for maintaining the operation of the invention in the absence of current in the primary electric power network, the nanocrystalline core CT to provide self-feeding (8), the PCI containing a short range (LoRA) radio and a long range (MESH) radio (9), with their respective antennas, and a main PCI board (10) containing the CPU, a memory, a GPS module and an accelerometer module.

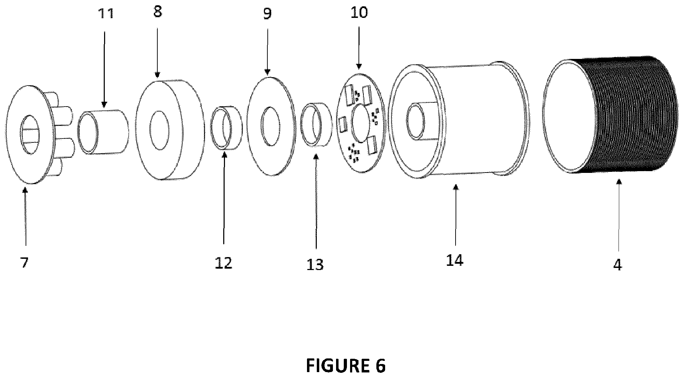

Figure 6 represents an exploded view of the invention, assembled in the GATEWAY function, showing all its components and respective assemblies. It shows the supercapacitors board (7), the assembling ring 1 (11), the self-feeding nanocrystalline CT (8), the communication PCI with the radios (9), the assembling ring 2 (12), the main PCI board (10), the assembling ring 3 (13), the GATEWAY plastic cabinet (14), and the OPV solar film (4).

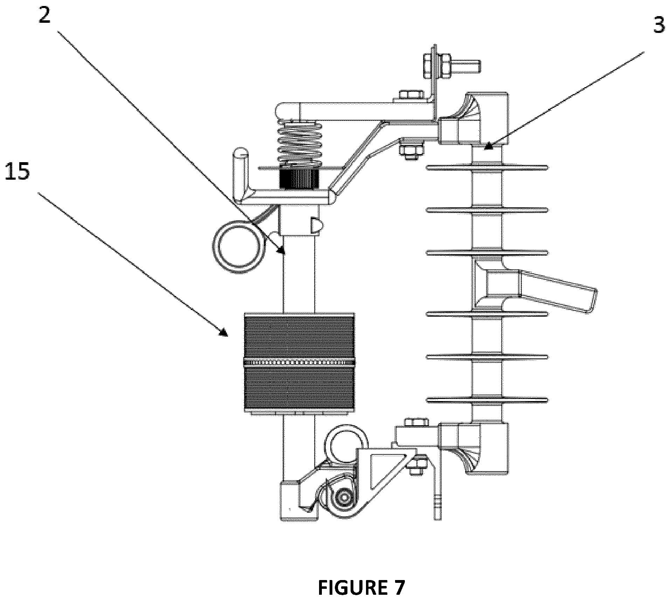

Figure 7 represents a 3D view of the invention, assembled in the SENSOR function (15) installed on the C-type fuse (3), solidary with the conventional fuse tube (2), preserving the function of originally protecting the fuse link inside same.

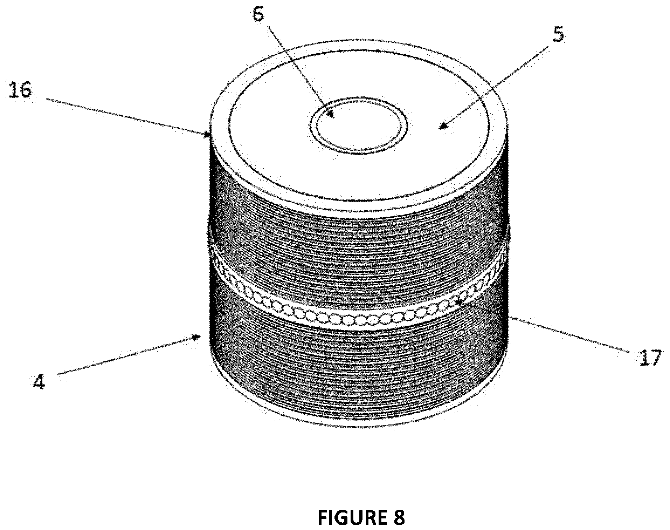

Figure 8 represents a 3D view of the invention, assembled in the SENSOR function, showing the OPV (Optical Photo Voltaic) solar capture film (4), the isolating epoxy resin (5) that will serve to make the device impervious to liquids and protect the electronic components thereof from humidity and corrosion, the SENSOR plastic cabinet (16) and the through-hole (6) for inserting the conventional fuse cartridge, making it possible to preserve the function originally protecting the fuse inside same.

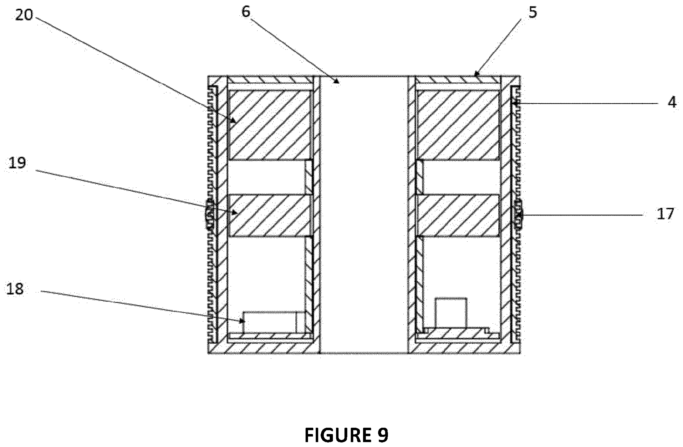

Figure 9 represents a cut view of the invention, assembled in the SENSOR function, showing the OPV photovoltaic film (4), the isolating epoxy resin (5) that will serve to make the device impervious to liquids and protect the electronic components thereof from humidity and corrosion, the through-hole for the conventional fuse tube (6), the high intensity LED ribbon that will show the status of the SENSOR (17), the nanocrystalline core CT to provide self-feeding (20), the main PCI containing the short range radio (LoRA, with its respective antenna, CPU, memory, GPS module and accelerometer module (18) and the CT of the current detector (19).

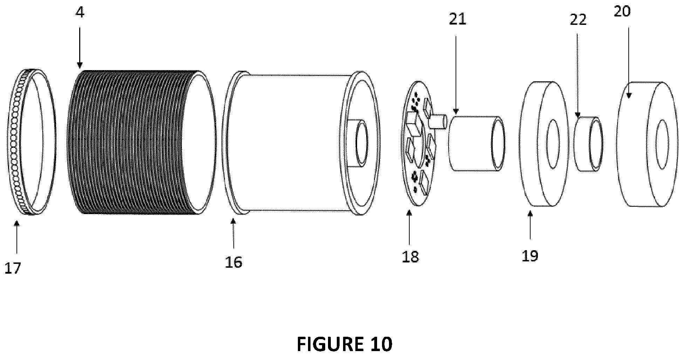

Figure 10 represents an exploded view of the invention, assembled in the SENSOR function, showing all its components and respective assemblies. It shows the OPV solar film (4), the high intensity LED ring (17), the SENSOR plastic cabinet (16), the main PCI board containing the CPU, memory, GPS module and accelerometer module (18), the assembling ring 4 (21), the CT of the current detector (19), the assembling ring (22), and the self-feeding nanocrystalline core CT (20).

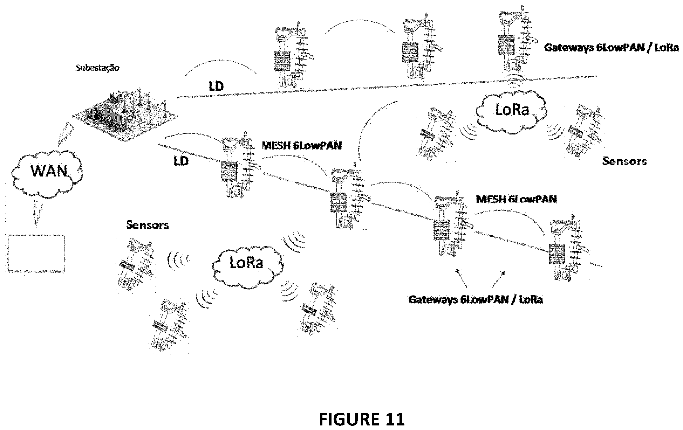

Figure 11 represents the topology of the communication network comprised of GATEWAY and SENSOR, exemplifying the flexibility of installation arrangements, that will make it possible to communicate several devices of the I0T (InterNet of Things) concept, using the communication technologies described in this document. This diagram shows the composition of the communication architecture formed by the invention in the GATEWAY function that establish networks that communicate with one another in the MESH topology, concomitantly when communication networks in the STAR topology are established, in every GATEWAY, "illuminating" a certain coverage area, thus allowing the communication of other automation elements and the remote metering, such as the invention in the SENSOR function, or electric power meters, that are compatible with the transport protocols described herein.

The present invention is directed to a smart self-feeding fuse with current detection and communication that was designed to be installed directly in a medium voltage electric power distribution network (15kV and 34 kV) using C-type base fuses as a physical support, preserving the original function of protecting the fuses and providing same with the functions of communicating and signaling transitory or permanent faults.

The device whose patent protection is sought could also be provided with connectors for the association to different radios for loT (InterNet of Things) technologies. Radios of other technologies can be housed in these same connectors, not limiting its use to the loT (InterNet of Things) segment. Radios for the GPRS, 3G, 4G or 5G technologies, or future communication technologies that may be available, can be housed in this same GATEWAY, since the object of the patent is to create a feeding device and the attachment of different electronics housed therein, in electric conductors of aerial power supply distribution networks having the C-type fuse base as its element of physical attachment and electric supply.

## Claims

1. A smart self-feeding fuse with current detection function and communication function, comprising:
- a plastic cabinet (14, 16) having a through-hole (6) for inserting the fuse tube (2);
- a self-feeding nanocrystalline core current transformer, CT, (8, 20) and an Organic Photo Voltaic standard solar cell, OPV, (4);
- a supercapacitor board (7) as the only energy storage medium;
- a set of radios (9) containing a short range of communication block (LoRA) (9) and a long range of communication block (MESH) (10), using an InterNet of Things ,IoT,
- a current detector (19) as a current sensor;
- a GPS module to identify georeferenced coordinates of the fuse;
- an accelerometer module for identifying the fall of the fuse tube (2); and
- a LED ring (17) for visual signaling;
wherein the smart self-feeding fuse is installed directly in the medium voltage energy power distribution grid using a C-type base fuse base as a physical support (3), providing both functions of communications GATEWAY and signaling transitory or permanent faults.

## Patentansprüche

1. Intelligente selbstspeisende Sicherung mit Stromdetektions- und Kommunikationsfunktion, enthaltend:
- einen Kunststoffkörper (14, 16) mit einem Durchgangsloch (6) zum Einführen einer Schmelzröhre (2);
- einen selbstspeisenden Stromtransformator mit nanokristallinem Kern, CT, (8, 20) und einer standardmäßigen organischen Photovoltaikzelle, OPV, (4);
- eine Superkondensator-Platine (7) als alleiniges Energiespeichermedium;
- einen Satz von Funkgeräten (9), die einen Kommunikationsblock für kurze Reichweite (LoRA) (9) und einen Kommunikationsblock für lange Reichweite (MESH) (10) enthalten, die loT (Internet of Things) verwenden,
- einen Stromdetektor (19) als Stromsensor;
- ein GPS-Modul zum Identifizieren von Georeferenzkoordinaten der Sicherung;
- ein Accelerometermodul zum Identifizieren eines Fallens der Schmelzröhre (2); und
- einen LED-Ring (17) zur visuellen Signalisierung;
wobei die intelligente selbstspeisende Sicherung direkt in einem Energieleistungsverteilungs-Mittelspannungsnetz installiert ist, indem eine Sicherungsbasis vom C-Typ als physikalischer Halter (3) verwendet wird, zum Bereitstellen von beiden Kommunikationsfunktionen GATEWAY und zum Signalisierung von transitorischen oder permanenten Fehlern.

## Revendications

1. Fusible intelligent à auto-alimentation doté de fonction de détection de courant et fonction de communication, comprenant :
- un boîtier en plastique (14, 16) ayant un trou de passage (6) pour l'insertion du tube fusible (2) ;
- un transformateur de courant à noyau nanocristallin auto-alimenté, CT (8, 20) et une cellule solaire Organique Photo Voltaïque standard, OPV, (4) ;
- une carte à supercondensateur (7) comme le seul milieu de stockage d'énergie ;
- un ensemble de radios (9) contenant un bloc de communication à courte portée (LoRA) (9) et un bloc de communication à longue portée (MESH) (10) utilisant un Internet des objets, IoT,
- un détecteur de courant (19) comme capteur de courant ;
- un module GPS pour identifier les coordonnées géoréférencées du fusible ;
- un module d'accéléromètre pour identifier la chute du tube fusible (2) ; et
- une bague LED (17) pour la signalisation visuelle ;
dans lequel le fusible intelligent auto-alimenté est installé directement dans le réseau de distribution d'énergie moyenne tension en utilisant une base de fusible de type C comme support physique (3), assurant à la fois les fonctions de communication GATEWAY et de signalisation des défauts transitoires ou permanents.
